(19) Europäisches Patentamt
European Patent Office
Office européen des brevets

(11) **EP 2 996 824 B1**

(12) **FASCICULE DE BREVET EUROPEEN**

(45) Date de publication et mention de la délivrance du brevet:
**07.02.2018 Bulletin 2018/06**

(51) Int Cl.:
**B09B 3/00** (2006.01)   **C22B 7/02** (2006.01)
**C03B 5/00** (2006.01)

(21) Numéro de dépôt: **14723789.5**

(22) Date de dépôt: **13.05.2014**

(86) Numéro de dépôt international:
**PCT/EP2014/059752**

(87) Numéro de publication internationale:
**WO 2014/184187 (20.11.2014 Gazette 2014/47)**

(54) **PROCÉDÉ D'EXTRACTION D'UN ÉLÉMENT CHIMIQUE D'UN MATÉRIAU IMPLIQUANT UNE RÉACTION D'OXYDORÉDUCTION LIQUIDE-LIQUIDE**

VERFAHREN ZUR EXTRAKTION EINES CHEMISCHEN ELEMENTS AUS EINEM MATERIAL MIT EINER FLÜSSIG-FLÜSSIG-REDOX-REAKTION

PROCESS FOR EXTRACTING A CHEMICAL ELEMENT FROM A MATERIAL INVOLVING A LIQUID-LIQUID REDOX REACTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.05.2013 FR 1354368**

(43) Date de publication de la demande:
**23.03.2016 Bulletin 2016/12**

(73) Titulaires:
• **Commissariat à l'Énergie Atomique et aux Énergies Alternatives**
**75015 Paris (FR)**
• **Centre National de la Recherche Scientifique**
**75016 Paris (FR)**

(72) Inventeurs:
• **GUILLOT, Marie**
**F-71880 Chatenoy Le Royal (FR)**
• **GOETTMANN, Frédéric**
**84350 Courthezon (FR)**
• **GRANDJEAN, Agnès**
**F-30330 Saint Marcel de Careiret (FR)**
• **RAVAUX, Johann**
**F-84000 Avignon (FR)**

(74) Mandataire: **Brevalex**
**95, rue d'Amsterdam**
**75378 Paris Cedex 8 (FR)**

(56) Documents cités:
**EP-A1- 0 714 860       DE-A1- 4 124 101**
**DE-A1- 19 947 343**

• **Rüdiger Deike ET AL: "Abschlussbericht zum Projekt Recyclingpotenziale bei Rückständen aus der Müllverbrennung", , 16 December 2012 (2012-12-16), pages 1-91, XP055328662, Retrieved from the Internet: URL:https://www.itad.de/information/studie n/20130110DEIKEHMVARecyclingpotentialAbsc h lussbericht.pdf [retrieved on 2016-12-13]**
• **L. Birnbaum ET AL: "Forschungszentrum Karlsruhe Untersuchung der physikalisch / chemischen Eigenschaften von Filterstäuben aus Müllverbrennungsanlagen (MVA)", , 1 January 1996 (1996-01-01), pages 1-47, XP055328671, Retrieved from the Internet: URL:https://publikationen.bibliothek.kit.e du/270039218/3813567 [retrieved on 2016-12-13]**

EP 2 996 824 B1

**Description**

**DOMAINE TECHNIQUE**

La présente invention se rapporte à un procédé d'extraction d'au moins un premier élément chimique $E_1$ d'un matériau choisi parmi les cendres et les latérites dans lequel il est contenu, ledit matériau comprenant en outre au moins un oxyde d'un deuxième élément chimique $E_2$, et ce procédé impliquant une réaction d'oxydoréduction liquide-liquide.
Ce procédé permet en particulier d'extraire des éléments chimiques rares d'intérêt économique et/ou des élément chimiques toxiques à partir de ce matériau, qui peut avantageusement être formé par des cendres.
Dans ce qui précède et ce qui suit, on précise que, par l'expression "élément chimique", on entend tout élément chimique répertorié dans le tableau périodique des éléments de Mendeleïev.

**ÉTAT DE LA TECHNIQUE ANTÉRIEURE**

Dans un contexte d'augmentation des cours du gaz naturel et du pétrole, d'une part, et d'une défiance accrue de certains pays vis-à-vis de l'énergie nucléaire, d'autre part, on assiste à un renouveau de l'utilisation de sources d'énergies anciennes, telles que le charbon et le bois.
Ces deux ressources sont, en particulier, utilisées de façon croissante pour la production d'électricité dans les centrales thermiques. Toutefois, la combustion du charbon ou du bois génère, entre autres résidus, des cendres parmi lesquelles des cendres dites "lourdes" (bottom ashes, en anglais), qui se déposent au fond de la chaudière, et des cendres dites "volantes" (fly ashes, en anglais) formées de poussières et de particules fines, qui sont soufflées de la chaudière jusqu'au pilier et collectées au moyen de précipitateurs électrostatiques.
La composition des cendres produites lors de la combustion du charbon ou du bois mais également, de manière plus large, lors de la combustion de déchets ménagers ou de boues produites par les stations d'épuration, varie en fonction de la nature et de l'origine du combustible utilisé. On observe toutefois certaines constantes. Comme éléments chimiques principaux, les cendres, notamment celles issues de la combustion du bois, renferment principalement du potassium, du fer et du phosphore, ces éléments chimiques se présentant généralement sous la forme d'oxydes. Les cendres, qu'elles soient lourdes ou volantes, contiennent également un certain nombre d'éléments chimiques rares parmi lesquels du cobalt, du nickel, du cuivre, des terres rares, de l'uranium et du thorium, qui présentent un réel intérêt économique. Mais ces cendres contiennent également des éléments chimiques toxiques, comme du plomb, du chrome, du nickel, du cadmium et/ou du mercure. Ces éléments chimiques rares - dont certains sont par ailleurs également toxiques - ainsi que ces éléments chimiques toxiques étant plus particulièrement présents dans les cendres volantes, en général sous une forme oxydée, ces dernières sont, à juste titre, considérées comme constituant des déchets dangereux.
Les cendres lourdes trouvent une utilisation dans la fabrication de ciments, de bétons, de tuiles et dans la réalisation de routes. Elles sont également utilisées comme engrais pour enrichir des sols agricoles du fait de leur forte teneur en potassium, fer et phosphore.
Si, aujourd'hui, environ 50% des cendres lourdes sont ainsi valorisées, il n'en est pas de même pour les cendres volantes. Ces dernières sont donc stockées, dans des conditions plus ou moins sûres, selon la législation en vigueur. Ainsi, dans certains pays, les cendres volantes sont mises en terril ou entreposées dans de grands bassins à ciel ouvert, ce qui n'est pas sans risque pour les nappes phréatiques ou les eaux superficielles, par exemple, en cas de rupture de digues. Les centrales thermiques étant souvent installées en bordure d'un canal ou d'un fleuve, il y a également un risque non négligeable de pollution de l'eau par les envols de ces cendres volantes. Ce mode de stockage fait donc peser un risque réel sur l'environnement et la santé des populations.
Il y a donc un intérêt double à traiter ces cendres volantes pour, d'une part, en maîtriser la toxicité et, d'autre part, en extraire les éléments chimiques à forte valeur ajoutée, dont certains peuvent être également toxiques.
Pour répondre à cette double problématique d'extraction des éléments chimiques d'intérêt et de piégeage des éléments chimiques toxiques, il a été proposé de soumettre ces cendres volantes à un procédé dit "de vitrification". Ce procédé consiste à chauffer les cendres volantes dans un four à plus de 1300°C. Sous l'effet de cette forte température, certains des métaux lourds contenus dans lesdites cendres se vaporisent. Ils sont ensuite récupérés, au moyen d'un traitement de gaz et d'eau, sous forme de boues métallifères pour être réutilisés en industrie. Les cendres volantes, quant-à-elles, se liquéfient sous l'effet de cette forte température. Ce liquide, sous l'effet d'un refroidissement brutal, donne lieu à un produit présentant une structure amorphe s'apparentant à un verre, dénommé "vitrifiat", plus ou moins appauvri de sa charge initiale en métaux lourds. Ce vitrifiat est ensuite conservé dans des centres de stockage de déchets.
Si ce procédé dit "de vitrification" s'avère relativement efficace pour récupérer le zinc contenu dans les cendres volantes et pour confiner les cendres avec ses autres éléments chimiques dans un vitrifiat dont le stockage pose moins de problèmes environnementaux que le stockage à ciel ouvert, il ne permet toutefois pas d'extraire l'ensemble des éléments chimiques d'intérêt économique, en particulier ceux dont la température d'ébullition est supérieure à la température appliquée dans le four. Ces éléments chimiques d'intérêt économique non séparés restent, par conséquent, piégés dans le vitrifiat et ne sont donc pas valorisés. Les documents DE19947343A1 et DE4124101A1 décrivent des procédés d'extraction des éléments chimiques des cendres volantes. Le but de l'invention est par conséquent de pallier les inconvénients du procédé de l'art antérieur et de proposer un procédé d'extraction qui permette d'optimiser la séparation et, par conséquent, la récupération des éléments chimiques d'intérêt économique, éventuellement toxiques, à partir des cendres volantes dans lesquels ces éléments chimiques sont présents.

Un autre but de l'invention est le corollaire du précédent en ce sens qu'il consiste à fournir un procédé d'extraction qui, de fait, limite encore la toxicité des produits résiduels et le risque environnemental directement lié à leur stockage.

Un autre but de l'invention est de proposer un procédé qui ne se limite pas uniquement à l'extraction des éléments chimiques d'intérêt économique, éventuellement toxiques, contenus dans les cendres volantes, mais également à l'extraction de ces mêmes éléments chimiques présents dans des minerais de type latérite.

En effet, les latérites peuvent contenir de nombreux éléments chimiques, parmi lesquels du fer, du cobalt, du nickel, de l'aluminium, du chrome, du silicium, du cuivre ou encore du zinc. De tels éléments chimiques sont généralement présents sous une forme oxydée. Si le document US 2006/0228279 A1 décrit un procédé permettant la récupération du nickel et du cobalt à partir de tels minerais latéritiques, ce document n'enseigne pas de procédé permettant d'extraire, de ces minerais, les autres éléments chimiques d'intérêt économique. En outre, le procédé de récupération décrit dans ce document US 2006/0228279 A1 est un procédé qui met en oeuvre de nombreuses étapes, dont certaines sont particulièrement délicates à conduire. On peut notamment citer la première étape qui consiste à faire réagir le minerai latéritique avec de l'acide sulfurique, l'ensemble étant porté à haute pression et haute température.

Un autre but de l'invention est, par conséquent, de proposer un procédé d'extraction qui permette d'optimiser la séparation et la récupération des éléments chimiques d'intérêt économique, éventuellement toxiques, à partir des cendres ou des latérites dans lesquels ils sont présents, ce procédé d'extraction comprenant un nombre relativement limité d'étapes et dont la mise en oeuvre ne requiert pas la manipulation, notamment dans des conditions de pression et de température élevées, de solutions acides ou basiques fortement concentrées.

**EXPOSÉ DE L'INVENTION**

Les buts précédemment énoncés ainsi que d'autres sont atteints par un procédé d'extraction d'au moins un premier élément chimique $E_1$ d'un matériau dans lequel il est contenu, ce matériau comprenant en outre au moins un oxyde d'un deuxième élément chimique $E_2$ choisi parmi le silicium, le fer, l'aluminium et le calcium, ledit matériau étant choisi parmi les cendres et les latérites. Selon l'invention, ce procédé comprenant les étapes successives suivantes :

(a) le mélange, à l'état fondu, du dit matériau avec au moins un oxyde d'un troisième élément chimique $E_3$ et/ou au moins un précurseur d'un tel oxyde, pour former une matrice verrière comprenant ledit premier élément chimique $E_1$,

(b) la mise en contact de ladite matrice verrière, à l'état fondu, avec une phase liquide comprenant un quatrième élément chimique $E_4$, ledit quatrième élément chimique $E_4$ étant un agent réducteur apte à réduire ledit premier élément chimique $E_1$, moyennant quoi ledit premier élément chimique $E_1$ migre dans ladite phase liquide, et

(c) la séparation, de ladite matrice verrière, de ladite phase liquide comprenant ledit premier élément chimique $E_1$.

Le procédé selon l'invention permet d'extraire au moins un premier élément chimique $E_1$ du matériau tel que défini ci-dessus et dans lequel ce premier élément chimique $E_1$ est initialement présent, par le choix d'un quatrième élément chimique $E_4$ qui a pour propriété d'être capable de réduire ce premier élément chimique $E_1$.

Le procédé selon l'invention mettant en oeuvre des températures auxquelles les différents produits impliqués se trouvent à l'état fondu, il permet d'extraire le ou les premiers éléments chimiques $E_1$, quelle que soit leur température d'ébullition, contrairement au procédé dit "de vitrification" de l'art antérieur. Ainsi, le procédé selon l'invention permet d'extraire un nombre supérieur de premiers éléments chimiques $E_1$ d'intérêt économique que ce procédé de l'art antérieur. Par conséquent, le procédé selon l'invention permet une diminution encore plus marquée de la teneur en éléments chimiques résiduels si bien que la matrice verrière obtenue à l'issue de ce procédé présente *de facto* une teneur en tels éléments chimiques qui est plus faible que celle du vitrifiat de l'art antérieur. Le risque environnemental lié au stockage de cette matrice verrière est, par conséquent, diminué à deux titres, d'une part, en raison de la teneur plus faible en éléments chimiques résiduels et, d'autre part, du fait de l'immobilisation, dans une réelle structure de verre (la matrice verrière) et non simplement dans une structure s'apparentant à du verre (le "vitrifiat"), des dits éléments chimiques résiduels.

Le procédé selon l'invention n'est pas limité à l'extraction du premier élément chimique $E_1$ d'un matériau formé par des cendres, mais peut être mis en oeuvre pour extraire ce même premier élément chimique $E_1$ à partir de latérites dans lesquelles il est contenu, à la condition que ces latérites comprennent en outre au moins un oxyde d'un deuxième élément chimique $E_2$ choisi parmi le silicium, le fer, l'aluminium et le calcium. Selon l'invention, le matériau contenant le (ou les) premier(s) élément(s) chimique(s) $E_1$ et comprenant en outre au moins un oxyde d'un deuxième élément

chimique $E_2$ tel que mentionné ci-dessus est choisi parmi les cendres et les latérites.

Lorsque ce matériau est choisi parmi les cendres, ces cendres peuvent comprendre des cendres lourdes mais comprennent avantageusement des cendres volantes, ces dernières étant plus fortement chargées en métaux. En effet, par rapport aux cendres lourdes, les cendres volantes comprennent une proportion plus importante d'éléments chimiques rares et à forte valeur ajoutée, comme le cobalt, le nickel, le cuivre, des terres rares, l'uranium et le thorium. Elles comprennent également des éléments chimiques toxiques, comme de nouveau le nickel, mais également le chrome, le plomb, le cadmium et/ou le mercure.

Les cendres, et notamment les cendres volantes, peuvent comprendre les cendres produites lors de la combustion de charbon, de bois, de déchets ménagers et/ou de boues provenant de stations d'épuration.

Lorsque ce matériau est choisi parmi les latérites, on peut notamment choisir des latérites qui contiennent une fraction minérale de type argile et qui renferment, entre autres, du nickel et du cobalt.

Le premier élément chimique $E_1$, qui est extrait du matériau grâce au procédé selon l'invention, peut être un métal de transition qui se présente généralement, dans le matériau, sous une forme oxydée. Le premier élément chimique $E_1$ peut être plus particulièrement choisi parmi le cobalt, le nickel, le cuivre, le ruthénium, le rhodium, le palladium, l'argent, l'iridium, le platine et l'or.

Lors de l'étape (a) du procédé selon l'invention, on procède au mélange du matériau, dans lequel le(s) premier(s) élément(s) chimique(s) $E_1$ est(sont) contenu(s), avec au moins un oxyde d'un troisième élément chimique $E_3$ et/ou au moins un précurseur d'un tel oxyde de troisième élément chimique $E_3$.

Cet oxyde de troisième élément chimique $E_3$ est choisi de telle sorte qu'il soit apte à former une matrice verrière incorporant le matériau fondu. En d'autres termes, cet oxyde de troisième élément chimique $E_3$ est choisi parmi les oxydes qui peuvent être mis en oeuvre dans la fabrication du verre, en particulier les oxydes qui, à eux seuls, mais également en mélange, peuvent former un verre.

Parmi les oxydes qui, à eux seuls, permettent de former du verre, il faut mentionner le dioxyde de silicium ou silice $SiO_2$ qui est de loin l'oxyde le plus répandu pour former du verre. Mais d'autres oxydes peuvent également être utilisés comme précurseurs du verre. On peut en particulier citer le trioxyde de bore $B_2O_3$, le pentoxyde de phosphore $P_2O_5$ (ou plus exactement $P_4O_{10}$), le dioxyde de germanium ($GeO_2$) ou encore le trioxyde d'arsenic ou oxyde arsénieux $As_2O_3$. Ces oxydes qui viennent d'être cités peuvent être utilisés, seuls ou en mélange, notamment avec la silice, comme précurseurs du verre.

D'autres oxydes tels que l'oxyde d'aluminium ou alumine $Al_2O_3$, le pentoxyde de vanadium $V_2O_5$ ou encore le dioxyde d'étain $SnO_2$ peuvent également être utilisés. Toutefois, ces oxydes sont utilisés en mélange avec l'un ou plusieurs des oxydes qui ont été préalablement cités comme pouvant constituer à eux seuls des précurseurs du verre.

Ce troisième élément chimique $E_3$ est avantageusement choisi parmi le silicium, l'aluminium, le bore, le vanadium et l'étain.

Lors de l'étape (a), on peut également procéder au mélange du matériau avec au moins un précurseur du ou des oxydes de troisième élément chimique $E_3$ qui viennent d'être décrits. On entend par précurseur, tout composé qui, à la température à laquelle tous les constituants présents dans le mélange sont à l'état fondu, s'est transformé sous la forme d'oxyde de troisième élément chimique $E_3$.

Un tel composé peut notamment être choisi parmi un hydroxyde, un nitrate, un carbonate, un sulfate et un borate.

A titre d'exemple, un précurseur du trioxyde de bore $B_2O_3$ peut être choisi parmi l'acide borique $B(OH)_3$ et le borate de sodium ou borax $Na_2B_4O_7.10H_2O$. Ainsi, lorsque le mélange formé initialement par le matériau et l'acide borique (et/ou le borax) est porté à l'état fondu, l'acide borique (et/ou le borax) s'est transformé en trioxyde de bore.

Lors de l'étape (a), on peut également procéder au mélange du matériau avec au moins un oxyde d'un troisième élément chimique $E_3$ et au moins un précurseur d'un tel oxyde de troisième élément chimique $E_3$, le troisième élément chimique $E_3$ de l'oxyde pouvant être identique ou différent de celui du précurseur.

Lorsque le matériau renferme au moins un oxyde de deuxième élément chimique $E_2$ qui peut, comme l'oxyde de troisième élément chimique $E_3$ et/ou le précurseur d'un tel oxyde, être mis en oeuvre dans la fabrication du verre, la formation de la matrice verrière est favorisée.

Cette configuration avantageuse du procédé selon l'invention se produit lorsque le matériau comprend des cendres ou des latérites. Le mélange de l'étape (a) est réalisé à l'état fondu, c'est-à-dire que le mélange est effectué à une température à laquelle tous les constituants présents dans le mélange sont à l'état liquide.

Cette température de mélange peut, par conséquent, être supérieure à la température de fusion la plus élevée entre la température de fusion du matériau et celle du ou des oxydes de troisième élément chimique $E_3$.

Dans un mode de réalisation avantageux, l'étape (a) du procédé selon l'invention comprend le mélange du matériau et d'au moins un oxyde de troisième élément chimique $E_3$ et/ou d'au moins un précurseur d'un tel oxyde en présence d'au moins un fondant et/ou d'au moins un stabilisant.

La présence d'un fondant permet notamment d'abaisser la température de fusion du ou de plusieurs des oxydes de troisième élément chimique $E_3$ et, par conséquent, d'abaisser la température de mélange et ainsi de faciliter cette opération de mélange, à l'état fondu, du matériau avec ce ou ces oxydes, tout en limitant la consommation d'énergie nécessaire pour l'obtention de la matrice verrière à l'issue de cette l'étape (a).

Le fondant peut comprendre au moins un oxyde d'un élément chimique alcalin et est, de préférence, choisi parmi l'oxyde de lithium $Li_2O$, l'oxyde de sodium $Na_2O$ et l'oxyde de potassium $K_2O$. On peut également utiliser, comme fondant, des précurseurs permettant, comme pour l'oxyde de troisième élément chimique $E_3$, d'obtenir ledit oxyde d'élément chimique alcalin à la à la température à laquelle tous les constituants présents dans le mélange sont à l'état fondu. On peut ainsi utiliser un feldspath ou un hydroxyde d'un élément chimique alcalin, comme l'hydroxyde de sodium ou soude NaOH et l'hydroxyde de potassium ou potasse KOH.

La présence d'un stabilisant permet de modifier certaines des propriétés de la matrice verrière obtenue lors de l'étape (a), notamment celles qui se trouvent être fragilisées du fait de l'introduction d'un ou de plusieurs fondants.

Le stabilisant peut comprendre au moins un oxyde d'un élément chimique choisi parmi le zinc, le fer, le plomb et un élément chimique alcalino-terreux tel que le calcium et le magnésium. Le stabilisant peut ainsi être choisi parmi l'oxyde de zinc ZnO, l'oxyde de fer(III) ou oxyde ferrique $Fe_2O_3$, le monoxyde de plomb PbO, l'oxyde de calcium ou chaux vive CaO et l'oxyde de magnésium ou magnésie MgO.

Comme pour l'oxyde de troisième élément chimique $E_3$, on peut utiliser, comme stabilisant, des précurseurs permettant d'obtenir, à la température à laquelle tous les constituants présents dans le mélange sont à l'état fondu, ledit oxyde d'un élément chimique choisi parmi le zinc, le fer, le plomb et un élément chimique alcalino-terreux.

Dans un mode de réalisation plus particulièrement avantageux du procédé selon l'invention, l'étape (a) comprend le mélange du matériau, d'au moins un oxyde du troisième élément chimique $E_3$ et/ou d'au moins un précurseur d'un tel oxyde, d'au moins un fondant et d'au moins un stabilisant.

Selon une première variante, l'étape (a) du procédé selon l'invention est réalisée en une seule étape et comprend le mélange simultané, à l'état fondu, de l'ensemble des constituant destinés à former la matrice verrière, à savoir le matériau, le ou les oxyde(s) de troisième élément chimique $E_3$ et/ou le ou les précurseur(s) d'un ou de tel(s) oxyde(s) et, le cas échéant, le ou les fondant(s) et/ou le ou les stabilisant(s).

On peut procéder au mélange à froid (par exemple, à la température ambiante) de tous les constituants puis porter l'ensemble à la température permettant d'obtenir le mélange à l'état fondu de tous ces constituants.

On peut également procéder au mélange à froid (par exemple, à la température ambiante) du ou des oxyde(s) de troisième élément chimique $E_3$ et/ou du ou des précurseur(s) d'un ou de tel(s) oxyde(s) et, le cas échéant, du ou des fondant(s) et/ou du ou des stabilisant(s) puis porter l'ensemble à l'état fondu puis y ajouter le matériau afin d'obtenir le mélange à l'état fondu de tous ces constituants.

Selon une deuxième variante, l'étape (a) du procédé selon l'invention comprend les sous-étapes successives suivantes :

> ($a_1$) la sélection d'une fritte de verre, puis
> ($a_2$) le mélange, à l'état fondu, de ladite fritte de verre avec le matériau pour former la matrice verrière comprenant le (ou les) premier(s) élément(s) chimique(s) $E_1$.

Au sens de l'invention, l'expression "fritte de verre" couvre non seulement du verre se présentant sous forme de granulés (ce que recouvre la définition étymologique de fritte de verre), mais également du verre quelle que soit sa forme (bloc, plaque, fondu,...) ou, de manière plus générale, une matrice verrière, à la condition que cette dernière ne comprenne pas de premier(s) élément(s) chimique(s) $E_1$.

Ainsi, dans le cadre de cette deuxième variante du procédé selon l'invention, il est possible de recourir à une fritte de verre déjà préparée et, en particulier, à une fritte de verre telle que disponible commercialement.

La fritte de verre sélectionnée lors de la sous-étape ($a_1$) peut également être préparée lors de la mise en oeuvre du procédé selon l'invention et, en particulier, être obtenue par le mélange, à l'état fondu, du ou des oxyde(s) de troisième élément chimique $E_3$ et/ou du ou des précurseur(s) d'un ou de tel(s) oxyde(s) et, le cas échéant, du ou des fondant(s) et/ou du ou des stabilisant(s).

Cette fritte de verre peut être broyée plus ou moins grossièrement avant de procéder au mélange de l'étape ($a_2$).

Pour l'étape ($a_2$), on peut procéder au mélange à froid (par exemple, à la température ambiante) de la fritte de verre avec le matériau puis porter l'ensemble à la température permettant d'obtenir le mélange à l'état fondu de tous ces constituants.

On peut également porter la fritte de verre à l'état fondu puis y ajouter le matériau afin d'obtenir le mélange à l'état fondu de tous ces constituants.

Au terme de cette étape (a) qui correspond au mélange à l'état fondu du matériau, du ou des oxyde(s) de troisième élément chimique $E_3$ et, le cas échéant, du ou des fondant(s) et/ou du ou des stabilisant(s), on obtient une matrice verrière comprenant le ou les premier(s) élément(s) chimique(s) $E_1$, que cette étape (a) soit réalisée en une seule étape ou par la mise en oeuvre des sous-étapes successives ($a_1$) et ($a_2$).

On peut noter qu'à l'issue de cette étape (a), le ou les premier(s) élément(s) chimique(s) $E_1$, qu'il(s) soit(ent) d'intérêt économique et/ou toxique(s), se trouve(nt) confiné(s) dans la matrice verrière et, dès lors, sous une forme présentant moins de risque d'un point de vue environnemental que les éléments chimiques présents dans le vitrifiat de l'art antérieur.

La matrice verrière obtenue lors de l'étape (a) peut être refroidie jusqu'à se présenter sous une forme solide, par exemple en vue d'une mise en oeuvre différée des autres étapes, et notamment des étapes (b) et (c), du procédé selon l'invention. Cette matrice verrière peut également être maintenue à l'état fondu pour la mise en oeuvre de l'étape (b) suivante.

Lors de l'étape (b), la matrice verrière obtenue à l'étape (a) est mise en contact, toujours à l'état fondu, avec une phase liquide qui comprend un quatrième élément chimique $E_4$.

Ce quatrième élément chimique $E_4$ est un agent réducteur et est, par conséquent, susceptible de donner des électrons, conformément à l'équation (1) suivante :

$$E_4^0 \rightarrow E_4^{n+} + {}_ne^- \qquad (1)$$

Ce quatrième élément chimique $E_4$ est en particulier choisi de telle sorte qu'il soit apte à réduire le (ou les) premier(s) élément(s) chimique(s) $E_1$. Ainsi, le premier élément chimique $E_1$ sera en mesure de capter des électrons donnés par le quatrième élément chimique $E_4$, conformément à l'équation (2) suivante :

$$E_1^{p+} + {}_pe^- \rightarrow E_1^0 \qquad (2)$$

Ce quatrième élément chimique $E_4$ est typiquement un métalloïde, en particulier le silicium, ou un métal, le métalloïde ou le métal se présentant sous sa forme réduite.

De manière avantageuse, lorsque ce quatrième élément chimique $E_4$ est un métal, il est choisi parmi l'aluminium, le silicium, le vanadium, le manganèse, le fer, le zinc, l'étain et le plomb.

Avantageusement, la phase liquide est formée par le quatrième élément chimique $E_4$ à l'état fondu. Cette phase liquide correspond à une phase du type "métal(aux) fondu(s)" tandis que la matrice verrière à l'état fondu correspond à une phase du type "oxyde(s) fondu(s)".

Après mise en contact de la matrice verrière, à l'état fondu, avec la phase liquide comprenant le quatrième élément chimique $E_4$, il se produit un échange d'électrons, par réaction d'oxydoréduction, entre le quatrième élément chimique $E_4$ présent, sous sa forme réduite $E4^0$, dans la phase liquide et le premier élément chimique $E_1$ présent, sous sa forme oxydée $E_1^{P+}$, dans l'autre phase liquide constituée par la matrice verrière.

La réaction d'oxydoréduction qui se produit entre ces premier et quatrième éléments chimiques $E_1$ et $E_4$ est conforme à l'équation (3) suivante :

$$E_1^{p+} + {}_{p/n}E_4^0 \leftrightarrow E_1^0 + {}_{p/n}E_4^{n+} \qquad (3)$$

Cette réaction d'oxydoréduction entraîne une répartition nouvelle des premier et quatrième éléments chimiques $E_1$ et $E_4$ entre les deux phases que sont la matrice verrière à l'état fondu et l'autre phase liquide : le premier élément chimique $E_1$, sous sa forme réduite $E_1^0$, migre dans la phase liquide tandis que le quatrième élément chimique $E_4$, sous sa forme oxydée $E_4^{n+}$, migre dans la matrice verrière à l'état fondu.

Dans une variante avantageuse du procédé selon l'invention, et dans le but de favoriser l'extraction du (ou des) premier(s) élément(s) chimique(s) $E_1$, la phase liquide comprend le (ou les) quatrième(s) élément(s) chimique(s) $E_4$ en une teneur en excès par rapport à la teneur en premier(s) élément(s) chimique(s) $E_1$.

Ainsi, dans une variante particulièrement avantageuse du procédé selon l'invention, on peut envisager un rapport molaire $E_4/E_1$ entre le (ou les) quatrième(s) élément(s) chimique(s) $E_4$ et le (ou les) premier(s) élément(s) chimique(s) $E_1$ qui est supérieur à 2, avantageusement supérieur à 5 et, préférentiellement, supérieur à 10.

La réaction d'oxydoréduction étant achevée, il ne reste plus qu'à mettre en oeuvre l'étape (c) du procédé selon l'invention, étape qui consiste à séparer, de la matrice verrière à l'état fondu (qui comprend les éléments chimiques sous forme oxydée), la phase liquide qui comprend les éléments chimiques sous forme réduite et, en particulier, le (ou les) premier(s) élément(s) chimique(s) $E_1$.

Ces deux phases étant séparées, chacune d'elle peut être soumise à un refroidissement. Un tel refroidissement permet notamment d'immobiliser de manière sûre, dans une structure solide et manipulable que présente alors la matrice verrière, les différents éléments chimiques qu'elle renferme, notamment le quatrième élément chimique $E_4$ ainsi que le matériau dépourvu du (ou des) premier(s) élément(s) chimique(s) $E_1$.

On observe donc que le procédé selon l'invention permet d'extraire le (ou les) premier(s) élément(s) chimique(s) $E_1$ tout en ne mettant en oeuvre qu'un nombre relativement limité d'étapes.

Toutefois, rien n'interdit de mettre en oeuvre une ou plusieurs étapes complémentaires.

Selon une première variante avantageuse, le procédé selon l'invention peut comprendre en outre une lixiviation du matériau, cette étape de lixiviation étant préalable à l'étape (a).

Cette lixiviation préalable du matériau permet d'éliminer certains des composés présents dans le matériau, avant que ce dernier ne soit soumis aux étapes (a), (b) et (c) décrites ci-dessus.

Cette lixiviation peut être réalisée au moyen d'eau, d'acide concentré ou de fluides supercritiques. Une lixiviation à l'eau neutre permet en particulier de recueillir les éléments chimiques présentant un intérêt pour l'agriculture, comme le potassium. Toutefois, la lixiviation, même conduite au moyen d'acide concentré ou de fluides supercritiques, n'est d'aucune utilité pour extraire les éléments chimiques d'intérêt économique et/ou toxiques.

Selon une deuxième variante avantageuse, le procédé selon l'invention peut comprendre en outre une deuxième séparation, de la phase liquide obtenue à l'issue de l'étape (c), du premier élément chimique $E_1$. Grâce à cette deuxième étape de séparation, le (ou les) premier(s) élément(s) chimique(s) est(sont) extraits puis isolés. Cette deuxième étape de séparation est bien évidemment postérieure à l'étape (c).

D'autres caractéristiques et avantages de l'invention apparaîtront à la lecture du complément de description qui suit, qui se rapporte à la réalisation d'essais de référence portant sur l'extraction d'un métal choisi parmi le cuivre, le cobalt et le nickel de matrices verrières préalablement chargées du dit métal ainsi qu'à la réalisation d'un essai portant sur l'extraction de cuivre d'un matériau constitué par des cendres de sarments de vigne.

Bien entendu, ces exemples ne sont donnés qu'à titre d'illustration de l'objet de l'invention et ne constituent en aucun cas une limitation de cet objet

## EXPOSÉ DÉTAILLÉ DE MODES DE RÉALISATION PARTICULIERS

Pour mettre en évidence la faisabilité de l'invention, des essais de référence ont été conduits.

### 1. Synthèse de matrices verrières non chargées

Trois matrices verrières non chargées, dénommées $Si_{58}B_{18}$, $B_{56}Si_{12}$ et $Si_{52}B_{16}V_{10}$ en fonction de leur teneur pondérale respective en silicium, bore et, le cas échéant, vanadium, ont été préparées par une technique verrière classique.

Ces trois matrices verrières ont été préparées à partir de tout ou partie des composés reportés dans le Tableau 1 ci-dessous, dans les proportions massiques en équivalent oxyde également reportées dans le tableau 1 ci-dessous. Après mélange de ces composés principaux dans un creuset adapté, ce dernier a été placé dans un four à température ambiante puis chauffé, à 300°C/h, jusqu'à la température précisée à la dernière ligne du Tableau 1, température à laquelle le mélange a été soumis pendant 3 heures.

Tableau 1

| Composés | Equivalent oxyde | $Si_{58}B_{18}$ | $B_{56}Si_{12}$ | $Si_{52}B_{16}V_{10}$ |
|---|---|---|---|---|
| $SiO_2$ | $SiO_2$ | 58.2 | 12.15 | 52.4 |
| $Na_2B_4O_7$ | $B_2O_3$ | 18.08 | 56.36 | 16.3 |
| $Na_2B_4O_7$ et $Na_2CO_3$ | $Na_2O$ | 13.77 | 31.46 | 12.4 |
| $Ca(OH)_2$ | CaO | 9.81 | - | 8.8 |
| $V_2O_5$ | $V_2O_5$ | - | - | 10 |
| Temp. (°C) | | 1200 | 700 | 1200 |

### 2. Synthèse de matrices verrières chargées en métal

La synthèse qui va être décrite dans le présent chapitre vise à simuler la réalisation de matrices verrières chargées en un métal provenant d'un matériau dont on cherche à l'extraire.

Les trois matrices verrières non chargées $Si_{58}B_{18}$, $B_{56}Si_{12}$ et $Si_{52}B_{16}V_{10}$ synthétisées ci-dessus ont été chacune chargées par un métal choisi parmi le cuivre, le cobalt et le nickel.

Pour ce faire, chaque matrice verrière non chargée a été grossièrement broyée puis disposée dans un creuset puis mise en contact avec un nitrate métallique hydraté choisi parmi le nitrate de cuivre $Cu(NO_3)_2.3H_2O$, le nitrate de cobalt $Co(NO_3)_2.3H_2O$ et le nitrate de nickel $Ni(NO_3)_3.3H_2O$.

Le creuset a ensuite été placé dans un four à la température de synthèse des différentes matrices verrières telles que précisées précédemment dans le Tableau 1 ci-dessus pendant une période de 2 heures.

Dans le Tableau 2 ci-dessous, sont reportées les neuf matrices verrières chargées en métal qui ont été synthétisées avec leurs teneurs massiques respectives en métal (cuivre, cobalt ou nickel) telles que mesurées par analyse dispersive en énergie (en anglais, Energy Dispersive Spectrometry ou EDS).

Tableau 2

| Matrice verrière | Source du métal | Matrice verrière chargée | Teneur en métal (%) |
|---|---|---|---|
| $Si_{58}B_{18}$ | $Cu(NO_3)_2.3H_2O$ | $Cu@Si_{58}B_{18}$ | 3.37 |
| $Si_{58}B_{18}$ | $Co(NO_3)_2.3H_2O$ | $Co@Si_{58}B_{18}$ | 2.45 |
| $Si_{58}B_{18}$ | $Ni(NO_3)_2.3H_2O$ | $Ni@Si_{58}B_{18}$ | 1.86 |
| $B_{56}Si_{12}$ | $Cu(NO_3)_2.3H_2O$ | $Cu@B_{56}Si_{12}$ | 3.94 |
| $B_{56}Si_{12}$ | $Co(NO_3)_2.3H_2O$ | $Co@B_{56}Si_{12}$ | 3.25 |
| $B_{56}Si_{12}$ | $Ni(NO_3)_2.3H_2O$ | $Ni@B_{56}Si_{12}$ | 2.01 |
| $Si_{52}B_{16}V_{10}$ | $Cu(NO_3)_2.3H_2O$ | $Cu@Si_{52}B_{l6}V_{10}$ | 2.85 |
| $Si_{52}B_{16}V_{10}$ | $Co(NO_3)_2.3H_2O$ | $CO@Si_{52}B_{16}V_{10}$ | 3.36 |
| $Si_{52}B_{16}V_{10}$ | $Ni(NO_3)_2.3H_2O$ | $Ni@Si_{52}B_{16}V_{10}$ | 2.85 |

3. Extraction du métal présent dans les matrices verrières chargées en métal

Les matrices verrières chargées en métal telles que synthétisées ci-dessus ont ensuite été extraites avec un métal réducteur choisi parmi l'étain et le zinc.

Pour ce faire, chaque matrice verrière chargée en métal a été mise en contact, à l'état fondu, avec le métal réducteur, dans le rapport massique métal réducteur/matrice verrière reporté dans le Tableau 3 ci-dessous.

La matrice verrière chargée en métal et le métal réducteur ont été placés dans un creuset en alumine. Ce creuset a été couvert puis placé dans un four à moufle pendant une durée de 2 heures à la température d'extraction reportée dans le Tableau 3 ci-dessous. Après retrait du four, le creuset a été refroidi à la température ambiante. Le produit obtenu, qui a l'apparence d'un bloc de verre, a été taillé puis poli afin d'être analysé au microscope à balayage électronique (MEB) couplé à un dispositif permettant l'analyse dispersive en énergie (EDS).

Le Tableau 3 ci-dessous reporte également le coefficient d'extraction obtenu pour chaque matrice verrière chargée en métal en fonction du métal réducteur utilisé, ce coefficient ayant été calculé en fonction de la référence interne choisie, en l'espèce Si.

Il est précisé que le zinc n'a été utilisé comme métal réducteur qu'avec la matrice verrière chargée en métal qui a été formée à partir de la matrice verrière $B_{56}Si_{12}$, cette dernière se trouvant à l'état fondu à une température de 700°C, c'est-à-dire à, et donc compatible avec, une température inférieure à la température d'ébullition de 907°C du zinc.

Tableau 3

| Matrice verrière chargée | Métal réducteur | Rapport massique Métal/ Matrice verrière | Température d'extraction (°C) | Coefficient d'extraction (%) |
|---|---|---|---|---|
| $Cu@Si_{58}B_{18}$ | Sn | 1/2 | 1200 | 73 |
| $Co@Si_{58}B_{18}$ | Sn | 1/2 | 1200 | 86 |
| $Ni@Si_{58}B_{18}$ | Sn | 1/2 | 1200 | 96 |
| $Cu@B_{56}Si_{12}$ | Sn | 1/1 | 700 | 41 |
| $Co@B_{56}Si_{12}$ | Sn | 1/1 | 700 | 36 |
| $Ni@B_{56}Si_{12}$ | Sn | 1/1 | 700 | 92 |
| $Cu@Si_{52}B_{16}V_{10}$ | Sn | 1/2 | 1200 | 93 |
| $Co@Si_{52}B_{16}V_{10}$ | Sn | 1/2 | 1200 | 30 |
| $Ni@Si_{52}B_{16}V_{10}$ | Sn | 1/2 | 1200 | 14 |
| $Cu@B_{56}Si_{12}$ | Zn | 1/1 | 700 | 99 |

(suite)

| Matrice verrière chargée | Métal réducteur | Rapport massique Métal/ Matrice verrière | Température d'extraction (°C) | Coefficient d'extraction (%) |
|---|---|---|---|---|
| $Co@B_{56}Si_{12}$ | Zn | 1/1 | 700 | 100 |
| $Ni@B_{56}Si_{12}$ | Zn | 1/1 | 700 | 100 |

Les essais de référence qui viennent d'être décrits montrent la faisabilité de l'extraction du métal (cuivre, cobalt ou nickel) des matrices verrières chargées en ce métal, au moyen d'un métal réducteur, que ce soit l'étain ou le zinc.

4. Synthèse d'une matrice verrière et extraction du cuivre par la mise en oeuvre du procédé d'extraction selon l'invention

Le procédé d'extraction selon l'invention va maintenant être illustré par l'exemple suivant.

Le matériau utilisé est formé par des cendres de sarments de vigne dont la composition est reportée dans le Tableau 4 ci-dessous. Cette composition a été mesurée par analyse dispersive en énergie (EDS) et est donnée en pourcentage d'équivalent oxyde, sauf pour les teneurs en soufre et en cuivre.

Tableau 4

| Equivalent oxyde | $SiO_2$ | CaO | MgO | $K_2O$ | $Al_2O_3$ | $P_2O_5$ | S | Cu |
|---|---|---|---|---|---|---|---|---|
| Teneur(%) | 12.9 | 62.9 | 2.6 | 31.6 | 0.5 | 4.6 | 1.03 | 0.74 |

On observe que le matériau comprend du cuivre, qui est un élément chimique rare et d'intérêt économique que l'on va extraire de ce matériau. Ce matériau comprend en outre différents oxydes, notamment de l'oxyde de silicium, de l'oxyde de calcium ainsi que de l'oxyde d'aluminium.

On réalise, dans un creuset adapté, un mélange de ce matériau avec les oxydes mentionnés dans le Tableau 5 ci-dessous, dans les proportions massiques en équivalent oxyde également reportées dans le Tableau 5 ci-dessous.

Tableau 5

| Composés | Equivalent oxyde | Matrice verrière conforme à l'invention |
|---|---|---|
| $SiO_2$ | $SiO_2$ | 58.2 |
| $Na_2B_4O_7$ | $B_2O_3$ | 18.08 |
| $Na_2B_4O_7$ et $Na_2CO_3$ | $Na_2O$ | 13.77 |
| $Ca(OH)_2$ | CaO | - |
| Cendres | - | 9.81 |

Le creuset est ensuite placé dans un four à température ambiante puis chauffé, à 300°C/h, jusqu'à la température de 1200°C, pendant une période de 3 heures.

Le creuset est ensuite sorti du four et la matrice verrière obtenue est refroidie à température ambiante.

On procède ensuite à la mise en contact de cette matrice verrière avec un métal réducteur, en l'espèce l'étain.

Pour ce faire, on place 4g de cette matrice verrière avec 2g d'étain dans un creuset en alumine. Après avoir été couvert, le creuset est placé dans un four à moufle à 1200°C pendant une durée de 2 heures. Après retrait du four, on sépare, de la matrice verrière liquide, la phase liquide métallique. Après avoir refroidi, cette phase métallique se présente sous la forme d'une bille métallique d'1g.

L'analyse de cette bille est réalisée par spectrométrie d'émission atomique par plasma à couplage inductif (en anglais, Inductively Coupled Plasma - Atomic Emission Spectrometry ou ICP-AES), après dissolution de cette dernière dans l'eau régale (le rapport volumique $HCl/HNO_3$ étant de 2/1).

Cette analyse permet de montrer que l'on a extrait 473 $\mu$g de cuivre, ce qui correspond à un coefficient d'extraction de 19%.

Cette valeur de 19% peut sembler relativement faible par rapport aux valeurs de coefficient d'extraction obtenues lors des extractions, par l'étain, des matrices verrières de référence $Cu@Si_{58}B_{18}$, $Co@Si_{58}B_{18}$ et $Ni@Si_{58}B_{18}$ chargées respectivement en cuivre, cobalt et nickel (voir Tableau 2 ci-dessus).

Toutefois, cette valeur de 19% s'explique par la très faible teneur en cuivre présent dans la matrice verrière synthétisée, teneur qui est en l'espèce de 620 ppm. Etant très dilué dans la matrice verrière, l'élément chimique d'intérêt qu'est le cuivre est plus difficile à extraire. A titre de comparaison, la teneur en métal (cuivre, cobalt ou nickel) dans les matrices verrières de référence était supérieure à 3000 ppm.

Le coefficient d'extraction peut par conséquent être augmenté en réalisant une matrice verrière dans laquelle la proportion en élément d'intérêt, toxique ou non, est également augmentée.

## Revendications

**1.** Procédé d'extraction d'au moins un premier élément chimique $E_1$ d'un matériau dans lequel il est contenu, ledit matériau comprenant en outre au moins un oxyde d'un deuxième élément chimique $E_2$ choisi parmi le silicium, le fer, l'aluminium et le calcium, ledit matériau étant choisi parmi les cendres et les latérites, ce procédé comprenant les étapes successives suivantes :

(a) le mélange, à l'état fondu, du dit matériau avec au moins un oxyde d'un troisième élément chimique $E_3$ et/ou au moins un précurseur d'un tel oxyde, pour former une matrice verrière comprenant ledit premier élément chimique $E_1$,

(b) la mise en contact de ladite matrice verrière, à l'état fondu, avec une phase liquide comprenant un quatrième élément chimique $E_4$, ledit quatrième élément chimique $E_4$ étant un agent réducteur apte à réduire ledit premier élément chimique $E_1$, moyennant quoi ledit premier élément chimique $E_1$ migre dans ladite phase liquide, et

(c) la séparation, de ladite matrice verrière, de ladite phase liquide comprenant ledit premier élément chimique $E_1$.

**2.** Procédé selon la revendication 1, dans lequel l'étape (a) comprend le mélange du dit matériau et du dit oxyde du troisième élément chimique $E_3$ et/ou du dit précurseur d'un tel oxyde en présence d'au moins un fondant et/ou d'au moins un stabilisant.

**3.** Procédé selon la revendication 1 ou 2, dans lequel l'étape (a) comprend le mélange, à l'état fondu, du dit matériau, du dit oxyde de troisième élément chimique $E_3$ et/ou du dit précurseur d'un tel oxyde et, le cas échéant, du dit fondant et/ou du dit stabilisant.

**4.** Procédé selon la revendication 1 ou 2, dans lequel l'étape (a) comprend les sous-étapes successives suivantes :

($a_1$) la sélection d'une fritte de verre, puis
($a_2$) le mélange, à l'état fondu, de ladite fritte de verre avec ledit matériau.

**5.** Procédé selon la revendication 4, dans lequel la fritte de verre de la sous étape est obtenue par le mélange, à l'état fondu, du dit oxyde de troisième élément chimique $E_3$ et/ou du dit précurseur d'un tel oxyde et, le cas échéant, du dit fondant et/ou du dit stabilisant.

**6.** Procédé selon l'une quelconque des revendications 1 à 5, dans lequel les cendres comprennent des cendres volantes produites lors de la combustion de charbon, de bois, de déchets ménagers et/ou de boues provenant de stations d'épuration.

**7.** Procédé selon l'une quelconque des revendications 1 à 5, dans lequel ledit premier élément chimique $E_1$ est choisi parmi le cobalt, le nickel, le cuivre, le ruthénium, le rhodium, le palladium, l'argent, l'iridium, le platine et l'or.

**8.** Procédé selon l'une quelconque des revendications 1 à 7, dans lequel ledit troisième élément chimique $E_3$ est choisi parmi le silicium, l'aluminium, le bore, le vanadium et l'étain.

**9.** Procédé selon l'une quelconque des revendications 2 à 8, dans lequel le fondant comprend au moins un oxyde d'un élément chimique alcalin, de préférence choisi parmi l'oxyde de lithium $Li_2O$, l'oxyde de sodium $Na_2O$ et l'oxyde de potassium $K_2O$.

**10.** Procédé selon l'une quelconque des revendications 2 à 9, dans lequel le stabilisant comprend au moins un oxyde d'un élément chimique choisi parmi le zinc, le fer, le plomb et un élément chimique alcalino-terreux tel que le calcium et le magnésium.

**11.** Procédé selon l'une quelconque des revendications 1 à 10, dans lequel ledit quatrième élément chimique $E_4$ est

choisi parmi l'aluminium, le silicium, le vanadium, le manganèse, le fer, le zinc, l'étain et le plomb.

**12.** Procédé selon l'une quelconque des revendications 1 à 11, dans lequel le rapport molaire $E_4/E_1$ est supérieur à 2, avantageusement supérieur à 5 et, préférentiellement, supérieur à 10.

**13.** Procédé selon l'une quelconque des revendications 1 à 12, comprenant en outre une lixiviation du matériau, cette étape de lixiviation étant préalable à l'étape (a).

**14.** Procédé selon la revendication 13, dans lequel la lixiviation est réalisée au moyen d'eau, d'acide concentré ou de fluides supercritiques.

**15.** Procédé selon l'une quelconque des revendications 1 à 14, comprenant en outre une séparation, de la phase liquide obtenue à l'issue de l'étape (c), du premier élément chimique $E_1$.

**Patentansprüche**

**1.** Verfahren zur Extraktion wenigstens eines ersten chemischen Elements $E_1$ aus einem Material, in dem es enthalten ist, wobei das Material ferner wenigstens ein Oxid eines zweiten chemischen Elements $E_2$ enthält, ausgewählt aus Silizium, Eisen, Aluminium und Kalzium, wobei das Material ausgewählt ist aus den Aschen und den Lateriten, wobei dieses Verfahren die folgenden aufeinanderfolgenden Schritte umfasst:

(a) Mischen des Materials im geschmolzenen Zustand mit wenigstens einem Oxid eines dritten chemischen Elements $E_3$ und/oder wenigstens einem Präkursor eines solchen Oxids, um eine glasartige Matrix zu bilden, die das erste chemische Element $E_1$ enthält,
(b) Inkontaktbringen der glasartigen Matrix im geschmolzenen Zustand mit einer flüssigen Phase, die ein viertes chemisches Element $E_4$ enthält, wobei das vierte chemische Element $E_4$ ein Reduktionsmittel ist, das dazu ausgelegt ist, das erste chemische Element $E_1$ zu reduzieren, wodurch das erste chemische Element $E_1$ in die flüssige Phase migriert, und
(c) Separieren der flüssigen Phase, die das erste chemische Element $E_1$ enthält, von der glasartigen Matrix.

**2.** Verfahren nach Anspruch 1, wobei der Schritt (a) das Mischen des Materials und des Oxids des dritten chemischen Elements $E_3$ und/oder des Präkursors eines solchen Oxids in Anwesenheit wenigstens eines Flussmittels und/oder wenigstens eines Stabilisators umfasst.

**3.** Verfahren nach Anspruch 1 oder 2, wobei der Schritt (a) das Mischen des Materials im geschmolzenen Zustand, des Oxids des dritten chemischen Elements $E_3$ und/oder des Präkursors eines solchen Oxids sowie gegebenenfalls des Flussmittels und/oder des Stabilisators umfasst.

**4.** Verfahren nach Anspruch 1 oder 2, wobei der Schritt (a) die folgenden aufeinanderfolgenden Teilschritte umfasst:

($a_1$) das Auswählen einer Glasmasse, und dann
($a_2$) das Mischen der Glasmasse im geschmolzenen Zustand mit dem Material.

**5.** Verfahren nach Anspruch 4, wobei die Glasmasse des Teilschritts erhalten wird durch Mischen des Oxids des dritten chemischen Elements $E_3$ und/oder des Präkursors eines solchen Oxids sowie gegebenenfalls des Flussmittels und/oder des Stabilisators im geschmolzenen Zustand.

**6.** Verfahren nach einem der Ansprüche 1 bis 5, wobei die Aschen Flugaschen umfassen, die bei der Verbrennung von Kohle, von Holz, von Haushaltsabfällen und/oder von Schlämmen erzeugt werden, die von Klärwerken stammen.

**7.** Verfahren nach einem der Ansprüche 1 bis 5, wobei das erste chemische Element $E_1$ ausgewählt ist aus Kobalt, Nickel, Kupfer, Ruthenium, Rhodium, Palladium, Silber, Iridium, Platin und Gold.

**8.** Verfahren nach einem der Ansprüche 1 bis 7, wobei das dritte chemische Element $E_3$ ausgewählt ist aus Silizium, Aluminium, Bor, Vanadium und Zinn.

**9.** Verfahren nach einem der Ansprüche 2 bis 8, wobei das Flussmittel wenigstens ein Oxid eines chemischen Alkalielements enthält, vorzugsweise ausgewählt aus Lithiumoxid $Li_2O$, Natriumoxid $Na_2O$ und Kaliumoxid $K_2O$.

10. Verfahren nach einem der Ansprüche 2 bis 9, wobei der Stabilisator wenigstens ein Oxid eines chemischen Elements umfasst, das ausgewählt ist aus Zink, Eisen, Blei und einem chemischen Erdalkalielement wie zum Beispiel Kalzium und Magnesium.

11. Verfahren nach einem der Ansprüche 1 bis 10, wobei das vierte chemische Element $E_4$ ausgewählt ist aus Aluminium, Silizium, Vanadium, Mangan, Eisen, Zink, Zinn und Blei.

12. Verfahren nach einem der Ansprüche 1 bis 11, wobei das molare Verhältnis $E_4/E_1$ größer als 2 ist, vorzugsweise größer als 5, und bevorzugt größer als 10.

13. Verfahren nach einem der Ansprüche 1 bis 12, ferner umfassend ein Auslaugen des Materials, wobei dieser Schritt des Auslaugens dem Schritt (a) vorhergeht.

14. Verfahren nach Anspruch 13, wobei das Auslaugen realisiert wird mit Hilfe von Wasser, von konzentrierter Säure oder von superkritischen Fluiden.

15. Verfahren nach einem der Ansprüche 1 bis 14, ferner umfassend eine Separation des ersten chemischen Elements $E_1$ von der am Ende des Schritts (c) erhaltenen flüssigen Phase.

**Claims**

1. A process for extracting at least one first chemical element $E_1$ from a material in which it is contained, said material further comprising at least one oxide of a second chemical element $E_2$ chosen from silicon, iron, aluminium and calcium, said material being chosen from ash and laterites, this process comprising the successive following steps of:

   (a) melt blending said material with at least one oxide of a third chemical element $E_3$ and/or at least one precursor of such an oxide, to form a glass matrix comprising said first chemical element $E_1$,
   (b) contacting said glass matrix, in molten state, with a liquid phase comprising a fourth chemical element $E_4$, said fourth chemical element $E_4$ being a reducing agent able to reduce said first chemical element $E_1$, whereby said first chemical element $E_1$ migrates into said liquid phase, and
   (c) separating, from said glass matrix, said liquid phase comprising said first chemical element $E_1$.

2. The process according to claim 1, wherein step (a) comprises blending said material and said oxide of the third chemical element $E_3$ and/or said precursor of such an oxide in the presence of at least one flux and/or at least one stabilizer.

3. The process according to claim 1 or 2, wherein step (a) comprises melt blending said material, said oxide of the third chemical element $E_3$ and/or said precursor of such an oxide and, optionally, said flux and/or said stabilizer.

4. The process according to claim 1 or 2, wherein step (a) comprises the successive following sub-steps of:

   ($a_1$) selecting a glass frit, and then
   (a2) melt blending said glass frit with said material.

5. The process according to claim 4, wherein the glass frit of the sub-step is obtained by melt blending said oxide of the third chemical element $E_3$ and/or said precursor of such an oxide and, optionally, said flux and/or said stabilizer.

6. The process according to any of claims 1 to 5, wherein the ash comprises fly ash produced during the combustion of coal, wood, household refuse and/or sludge from treatment plants.

7. The process according to any of claims 1 to 5, wherein said first chemical element $E_1$ is chosen from cobalt, nickel, copper, ruthenium, rhodium, palladium, silver, iridium, platinum and gold.

8. The process according to any of claims 1 to 7, wherein said third chemical element $E_3$ is chosen from silicon, aluminium, boron, vanadium and tin.

9. The process according to any of claims 2 to 8, wherein the flux comprises at least one oxide of an alkaline chemical element, preferably chosen from lithium oxide $Li_2O$, sodium oxide $Na_2O$ and potassium oxide $K_2O$.

10. The process according to any of claims 2 to 9, wherein the stabilizer comprises at least one oxide of a chemical element chosen from zinc, iron, lead and an alkaline earth chemical element such as calcium and magnesium.

11. The process according to any of claims 1 to 10, wherein said fourth chemical element $E_4$ is chosen from aluminium, silicon, vanadium, manganese, iron, zinc, tin and lead.

12. The process according to any of claims 1 to 11, wherein the molar ratio $E_4/E_1$ is higher than 2, advantageously higher than 5 and, preferentially, higher than 10.

13. The process according to any of claims 1 to 12, further comprising leaching the material, this leaching step being prior to step (a).

14. The process according to claim 13, wherein the leaching is made by means of water, concentrated acid or supercritical fluids.

15. The process according to any of claims 1 to 14, further comprising separating, from the liquid phase obtained at the end of step (c), the first chemical element $E_1$.

**EP 2 996 824 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 19947343 A1
- DE 4124101 A1

- US 20060228279 A1